# EUROPÄISCHE PATENTSCHRIFT

(11) **EP 3 487 735 B1**
(45) Veröffentlichungstag und Bekanntmachung des Hinweises auf die Patenterteilung: **19.02.2020**
(21) Anmeldenummer: 17731146.1
(22) Anmeldetag: 20.06.2017
(51) Int. Cl.: B60T 13/74, F16H 25/20, F16H 25/22

(54) **FAHRZEUGBETRIEBSBREMSE MIT ELEKTROMECHANISCH-HYDRAULISCHER BREMSKRAFTVERSTÄRKUNG**
VEHICLE SERVICE BRAKE WITH ELECTROMECHANICAL-HYDRAULIC BRAKE SERVO ASSISTANCE
FREIN DE SERVICE D'UN VÉHICULE AVEC ASSISTANCE ELECTROMÉCHANIQUE ET HYDRAULIQUE

(30) Priorität: 20.07.2016 DE 102016113395
(43) Veröffentlichungstag der Anmeldung: 29.05.2019
(73) Patentinhaber: SFS Intec Holding AG, 9435 Heerbrugg (CH)
(72) Erfinder: ZACH, Marijo, 9443 Widnau (CH); KUSTER, Hanspeter, 9436 Balgach (CH); HUTTER, Pascal, 9444 Diepoldsau (CH); FREI, Stefan, 9443 Widnau (CH); KALB, Andreas, 6858 Schwarzach (AT)
(86) Internationale Anmeldenummer: PCT/EP2017/064986
(87) Internationale Veröffentlichungsnummer: WO 2018/015087

(56) Entgegenhaltungen:
- EP-A1- 2 641 796
- EP-B1- 1 058 795
- DE-A1-102008 014 995
- DE-A1-102008 062 180
- US-A1- 2012 144 823
- US-A1- 2012 248 862
- US-A1- 2014 090 371
- US-A1- 2015 028 664

## Beschreibung

Die Erfindung betrifft eine elektromechanisch betätigbare Fahrzeugbetriebsbremse mit einem Linearantrieb, bei dem von einem elektromechanischen Aktuator aus über ein Getriebe, das eine Rotationsbewegung des elektromechanischen Aktuators in eine Translationsbewegung umsetzt, auf ein Betätigungsteil für Radbremsen eingewirkt wird, wobei das Getriebe ein Wälzkörpergewindegetriebe ist, das eine Gewindespindel und eine Gewindemutter aufweist, die über mehrere Wälzkörper in Kontakt stehen, und wobei dem Linearantrieb mechanische Mittel zugeordnet sind, die ein Verklemmen der Gewindespindel und der Gewindemutter verhindern, wobei die mechanischen Mittel einen Vorsprung umfassen, der mit der Gewindespindel in kraftübertragender Verbindung steht und der mit einer Freistellung in der Gewindemutter derart zusammenwirkt, dass ein Anschlag in Umfangsrichtung gebildet wird, der das Verklemmen verhindert.

Außerdem betrifft die Erfindung einen Linearantrieb der im Oberbegriff des Patentanspruchs 15 angegebenen Art sowie mechanische Mittel der im Oberbegriff des Patentanspruchs 16 angegebenen Art.

Eine elektromechanisch betätigbare Fahrzeugbetriebsbremse der vorgenannten Art ist aus dem Dokument EP 1 058 795 B1 bekannt. Bei dieser bekannten Fahrzeugbetriebsbremse wirkt der elektromechanische Aktuator über das Getriebe direkt auf ein Betätigungselement ein, mittels welchem ein Reibbelag mit einer Bremsscheibe in Eingriff bringbar ist. Diese elektromechanische Betätigung einer Fahrzeugbetriebsbremse macht den üblicherweise in einem Kraftfahrzeug verwendeten Hydraulikkreis zum Bremsen überflüssig, denn die Bremsbetätigung erfolgt rein elektrisch.

Bei hydraulischen Bremsen von Kraftfahrzeugen besteht häufig ein Bedarf an Bremskraftverstärkung, damit nicht allein durch den Druck auf das Bremspedal die Bremsen wirksam betätigt werden.

Weiter ist es bei einer Fahrzeugbetriebsbremse wie der vorgenannten bekannten Fahrzeugbetriebsbremse erforderlich, das Gewinde der Gewindespindel und der Gewindemutter orientiert zu rollen, was deren Fertigung aufwändig macht.

Außerdem müssen eine auf der Gewindespindel montierte Radialanschlagscheibe und die Gewindemutter bei der Montage präzise aufeinander eingestellt werden.

Ferner ist es problematisch, dass bei dem Erreichen des Anschlags zwischen der Gewindespindel und der Gewindemutter unerwünschter Lärm erzeugt wird.

Schließlich ist problematisch, dass die bekannte elektromechanisch betätigbare Betriebsbremse nicht bei Kraftfahrzeugen, die bereits mit einem Hydraulikkreis für die Bremsen versehen sind, einsetzbar ist.

Aus dem Dokument DE 10 2008 062 180 A1 ist eine kombinierte Fahrzeugbremse bekannt, die eine hydraulisch betätigbare Betriebsbremse und eine elektromechanisch betätigbare Feststellbremsvorrichtung aufweist.

Aus dem Dokument US 2012/0144823 ist eine elektromechanisch unterstützte Fahrzeugbremse bekannt, bei der ein Kugelgewindetrieb auf einen Bremskolben wirkt. Gleichzeitig ist ein Bremspedal mechanisch mit dem System so verbunden, dass beide unabhängig voneinander oder gleichzeitig auf einen hydraulischen Bremskreislauf einwirken können.

Aufgabe der Erfindung ist es, für die oben genannten Probleme eine Lösung zur Verfügung zu stellen.

Erfindungsgemäß wird die Aufgabe ausgehend von einer elektromechanisch betätigbaren Fahrzeugbetriebsbremse der eingangs genannten Art dadurch gelöst, dass das Betätigungsteil ein Druckkolben ist, dass in einem Servobremsgehäuse ein hydraulischer Betriebsdruckraum von dem Druckkolben begrenzt ist, der zur Durchführung von verstärkten Betriebsbremsungen elektromechanisch über das Getriebe betätigbar ist, um seinerseits hydraulisches Druckmittel in dem Betriebsdruckraum mit Druck zu beaufschlagen, so dass der Druckkolben zur Erzielung einer Bremswirkung an einem abzubremsenden Fahrzeugrad für den Druckaufbau an dem Betätigungsteil einer Radbremse entlang einer Kolbenlängsachse betätigbar ist, und dass die mechanischen Mittel zusätzlich ein Ausgleichselement umfassen, das dem Vorsprung zugeordnet und axial federnd ausgebildet ist. Durch die erfindungsgemäße Lösung wird bei einer elektromechanisch betätigbaren Fahrzeugbetriebsbremse eine elektromechanisch-hydraulische Bremskraftverstärkung ermöglicht. Darüber hinaus kann der übliche Hydraulikkreis für die Bremsenbetätigung in Kraftfahrzeugen beibehalten werden.

Dadurch, dass dem Vorsprung, der ein Teil der mechanischen Mittel ist, erfindungsgemäß ein axial federnd ausgebildetes Ausgleichselement zugeordnet ist, lassen sich Belastung und Lärm bei dem Erreichen des Anschlags reduzieren. Darüber hinaus bildet das axial federnd ausgebildete Ausgleichselement, welches erfindungsgemäß dem vorgenannten Vorsprung zugeordnet ist, ein Kompensationselement, mit dem sich enge Längentoleranzen beim Radialanschlag eines Kugelgewindegetriebes einhalten lassen, so dass kein orientiertes Gewinde zwischen Gewindespindel und Gewindemutter nötig ist. Durch das nicht orientierte Gewinde zwischen Gewindespindel und Gewindemutter kann die Überlappung einer Radialanschlagscheibe bei der Gewindemutter je nach Anzahl der Zähne bei deren gegenseitiger Verzahnung in der Gesamtlänge massiv schwanken. Das durch das Ausgleichselement gebildete Kompensationselement verhindert, dass die Überlappung in der Gesamtlänge des Gesamtsystems schwankt, so dass sich die Längentoleranzen eines orientierten Gewindes erreichen lassen.

Von der oben erwähnten, bekannten kombinierten Fahrzeugbremse mit elektromechanisch betätigbarer Feststellbremse unterscheidet sich die elektromechanisch betätigbare Fahrzeugbetriebsbremse nach der Erfindung hauptsächlich dadurch, dass der Druckkolben nicht mit hydraulischem Druck beaufschlagt wird, sondern elektromechanisch über die Gewindespindel, und dass der Druckkolben seinerseits das hydraulische Druckmittel im hydraulischen Betriebsdruckraum mit Druck beaufschlagt. Die Gewindemutter wird dabei durch den Aktuator angetrieben. Darüber hinaus weist die elektromechanisch betätigbare Fahrzeugbetriebsbremse nach der Erfindung keine elektromechanisch betätigbare Feststellbremsvorrichtung auf. Erfindungsgemäß wird der Druckkolben elektromechanisch betätigt, um seinerseits das hydraulische Druckmittel in dem Betriebsdruckraum mit Druck zu beaufschlagen. Das wird dadurch erreicht, dass bei der Fahrzeugbetriebsbremse nach der Erfindung im Vergleich mit der bekannten kombinierten Fahrzeugbremse der hydraulische Betriebsdruckraum auf die entgegengesetzte Seite des Druckkolbens verlagert worden ist.

Vorteilhafte Ausgestaltungen der elektromechanisch betätigbaren Fahrzeugbetriebsbremse nach der Erfindung bilden die Gegenstände der abhängigen Ansprüche 2 bis 14.

In einer Ausgestaltung der elektromechanisch betätigbaren Fahrzeugbetriebsbremse nach der Erfindung ist bei dem Linearantrieb die Gewindemutter des Wälzkörpergewindegetriebes ortsfest ausgebildet und durch den Aktuator in Drehung versetzbar und die Gewindespindel ist axial beweglich ausgebildet und mit dem Druckkolben in Antriebsverbindung. Das steht im Gegensatz zu der aus dem eingangs bereits erwähnten Dokument EP 1 058 795 B1 bekannten Fahrzeugbetriebsbremse, bei der mit Hilfe der Gewindespindel direkt das Betätigungselement einer Radbremse angetrieben wird. In der vorliegenden Ausgestaltung der Fahrzeugbetriebsbremse nach der Erfindung betätigt hingegen die Gewindespindel den Druckkolben, der seinerseits hydraulisches Druckmittel mit Druck beaufschlagt, um über den üblichen Hydraulikkreis die Radbremsen zu betätigen. Unter Radbremsen sind hierbei zum Beispiel Scheibenbremsen zu verstehen.

In einer weiteren Ausgestaltung der Fahrzeugbetriebsbremse nach der Erfindung ist die Freistellung eine Nut. Dadurch lässt sich auf optimal einfache Weise ein weiteres Zurückstellen der Gewindemutter und so ein Verklemmen der Gewindespindel und der Gewindemutter verhindern.

In einer weiteren Ausgestaltung der Fahrzeugbetriebsbremse nach der Erfindung sind der Vorsprung und das Ausgleichselement an einer ringförmigen Radialanschlagscheibe ausgebildet. In dieser Ausgestaltung der Erfindung braucht somit lediglich die ohnehin vorhandene Radialanschlagscheibe zusätzlich mit dem Ausgleichselement versehen zu werden.

In einer weiteren Ausgestaltung der Fahrzeugbetriebsbremse nach der Erfindung ist die Radialanschlagscheibe an einem inneren Umfang mit einer Mehrkantverzahnung versehen. Auf diese Weise lässt sie sich mit einer entsprechenden Mehrkantverzahnung der Gewindespindel in wählbaren Relativpositionen kuppeln.

In einer weiteren Ausgestaltung der Fahrzeugbetriebsbremse nach der Erfindung ist die Radialanschlagscheibe getrennt von der Gewindespindel ausgebildet und mittels ihrer Mehrkantverzahnung auf einem Sechs- oder anderen Mehrkant der Gewindespindel fest oder lose montiert. Das vereinfacht den Aufbau der mechanischen Mittel, die dem Wälzkörpergewindegetriebe zuzuordnen sind, um ein Verklemmen der Gewindemutter und der Gewindespindel bei dem Zurückstellen der Gewindespindel sicher zu verhindern.

In einer weiteren Ausgestaltung der Fahrzeugbetriebsbremse nach der Erfindung sind die Radialanschlagscheibe und das Ausgleichselement 1-teilig ausgebildet. Das vereinfacht den Aufbau des Wälzkörpergewindegetriebes, bei dem lediglich die üblicherweise ohnehin vorhandene Radialanschlagscheibe gegen eine mit dem Ausgleichselement versehene Radialanschlagscheibe ausgetauscht zu werden braucht.

In einer weiteren Ausgestaltung der Fahrzeugbetriebsbremse nach der Erfindung sind die Radialanschlagscheibe und das Ausgleichselement durch eine Tellerfeder gebildet. Das bringt eine weitere Vereinfachung des Aufbaus des Wälzkörpergewindegetriebes mit sich.

In einer weiteren Ausgestaltung der Fahrzeugbetriebsbremse nach der Erfindung ist die Radialanschlagscheibe mit einem am äußeren Umfang integriertem Federelement ausgebildet. Dadurch wird der Aufbau des Wälzkörpergewindegetriebes noch weiter vereinfacht.

In einer weiteren Ausgestaltung der Fahrzeugbetriebsbremse nach der Erfindung ist die Radialanschlagscheibe am inneren und/oder äußeren Umfang mit inneren und/oder äußeren axial federnden Laschen als Vorsprüngen versehen und bildet mit diesen gemeinsam das Ausgleichselement. Durch diese Ausgestaltung ergibt sich ebenfalls eine Vereinfachung des Aufbaus des Wälzkörpergewindegetriebes, indem einfach die üblicherweise vorhandene Radialanschlagscheibe durch eine Radialanschlagscheibe ersetzt wird, die mit axial federnden Laschen versehen ist.

In einer weiteren Ausgestaltung der Fahrzeugbetriebsbremse nach der Erfindung sind die Radialanschlagscheibe und das Ausgleichselement 2-teilig ausgebildet. Das ermöglicht, die ohnehin vorhandene Radialanschlagscheibe gegen eine Radialanschlagscheibe auszutauschen, die mit dem Ausgleichselement versehen ist.

In einer weiteren Ausgestaltung der Fahrzeugbetriebsbremse nach der Erfindung ist auf die Radialanschlagscheibe axial auf einer Seite das Ausgleichselement aufgebracht. Das bringt noch eine weitere Vereinfachung des Wälzkörpergewindegetriebes mit sich.

In einer weiteren Ausgestaltung der Fahrzeugbetriebsbremse nach der Erfindung ist das Ausgleichselement als eine elastische Beschichtung ausgebildet. Das erleichtert die Herstellung der mit einem Ausgleichselement versehenen Radialanschlagscheibe. Die elastische Beschichtung kann zum Beispiel Gummi umfassen.

In einer weiteren Ausgestaltung der Fahrzeugbetriebsbremse nach der Erfindung ist das Ausgleichselement als eine Tellerfeder ausgebildet. Dadurch können sich gegenüber einer elastischen Beschichtung als Ausgleichselement zusätzliche Vorteile ergeben.

Für alle vorstehend beschriebenen Ausgestaltungen der Erfindung gelten die Vorteile:
- Bremsfunktion mit Ausgleichselement (sanfteres Rückfahren zum Anschlag)
- Ausgleich Toleranzen
- Bauteile können mit einem Sechskant oder mit einem anderen Mehrkant oder einer anderen Sechs- oder Mehrkantverzahnung ausgelegt sein, wobei
- diese Teilung eine einfache Positionierung der Anschlagscheibe ermöglicht und
- außerdem kein orientiertes Gewinderollen des Gegenstücks (zum Beispiel der Gewindespindel) notwendig ist.

Weitere Vorteile sind bei allen Ausgestaltungen der Erfindung:
- Das Ausgleichselement ermöglicht das Einhalten von engen Längentoleranzen beim Radialanschlag eines Wälzkörpergewindegetriebes, so dass kein orientiertes Gewinde (Gewindemutter, Gewindespindel) nötig ist.
- Mit dem Ausgleichselement lassen sich die Längentoleranzen eines orientierten Gewindes erreichen und dabei eine durch den Anschlagvorgang verursachte Lärmbelästigung verhindern.
- Durch die Teilung des Sechskants kann die Längentoleranz um mehrere Zehntelmillimeter schwanken. Im Stand der Technik wird das Gewinde orientierte gerollt oder es wird mit dem Teilungssprung gelebt. Mit dem erfindungsgemäßen Ausgleichselement können sehr enge Toleranzen eingestellt werden, so dass das Montieren der Radialanschlagscheibe auf dem Sechskant der Gewindespindel auch nicht mehr so präzise sein muss.

In der zusätzlich beanspruchten Ausbildung des Linearantriebs und der mechanischen Mittel sind diese unabhängig von der elektromechanisch betätigbaren Fahrzeugbetriebsbremse nach der Erfindung verwendbar.

Ausführungsbeispiele der Erfindung werden im Folgenden unter Bezugnahme auf die Zeichnungen näher beschrieben. Es zeigt
- Fig.1: teilweise im Längsschnitt eine Gesamtdarstellung einer bevorzugten Ausführungsform einer elektromechanisch betätigbaren Fahrzeugbetriebsbremse nach der Erfindung,
- Fig. 2a: als eine Einzelheit von Fig. 1 ein Wälzkörpergewindegetriebe bei ausgefahrener Gewindespindel,
- Fig. 2b: das Wälzkörpergewindegetriebe nach Fig. 2a, aber bei eingefahrener oder zurückgestellter Gewindespindel,
- Fig. 3a: in einer perspektivischen Darstellung das Wälzkörpergewindegetriebe nach Fig. 2a,
- Fig. 3b: in einer perspektivischen Darstellung das Wälzkörpergewindegetriebe nach Fig. 2b,
- Fig. 4a: in einer Schnittdarstellung ein 1-teilig ausgebildetes Ausgleichselement, das hier als eine Tellerfeder ausgebildet ist, die zugleich eine Radialanschlagscheibe bildet,
- Fig. 4b: in einer perspektivischen Darstellung das Ausgleichselement nach Fig. 4a,
- Fig. 5a: in Draufsicht ein 1-teilig als eine Radialanschlagscheibe ausgebildetes Ausgleichselement, das mit einem integrierten Federelement versehen ist,
- Fig. 5b: das Ausgleichselement nach Fig. 5a in einer Seitenansicht,
- Fig. 5c: das Ausgleichselement nach Fig. 5a in einer perspektivischen Darstellung,
- Fig. 6a: ein 1-teilig ausgebildetes Ausgleichselement, das wie sämtliche vorgenannten Ausgleichselemente als eine ringförmige Scheibe ausgebildet ist, hier aber an einem äußeren Umfang mit einem Radialanschlag und mit federnden Laschen versehen ist,
- Fig. 6b: ein Ausgleichselement wie in Fig. 6a, das aber auf einer Stirnseite mit federnden Laschen an einem inneren Umfang versehen ist,
- Fig. 6c: ein Ausgleichselement wie in Fig. 6b, bei dem aber die ringförmige Scheibe mit federnden Laschen auf einer anderen Seite an einem inneren Umfang versehen ist,
- Fig. 6d: das Ausgleichselement nach Fig. 6b in einer perspektivischen Darstellung,
- Fig. 6e: die Ausgleichsscheibe nach Fig. 6a in einer perspektivischen Darstellung,
- Fig. 7a: ein 2-teilig ausgebildetes Ausgleichselement, das aus einer Radialanschlagscheibe und aus einer auf einer Seite der Radialanschlagscheibe ausgebildeten elastischen Beschichtung als Dämpfungselement besteht,
- Fig. 7b: das Ausgleichselement nach Fig. 7a in einer Schnittdarstellung,
- Fig. 7c: das Ausgleichselement nach Fig. 7a in einer perspektivischen Darstellung,
- Fig. 8a: in Draufsicht ein 2-teilig ausgebildetes Ausgleichselement, das aus einer Radialanschlagscheibe mit auf einer Seite angebrachter Tellerfeder gebildet ist, und
- Fig. 8b: das Ausgleichselement nach Fig. 8a in einer Schnittdarstellung.

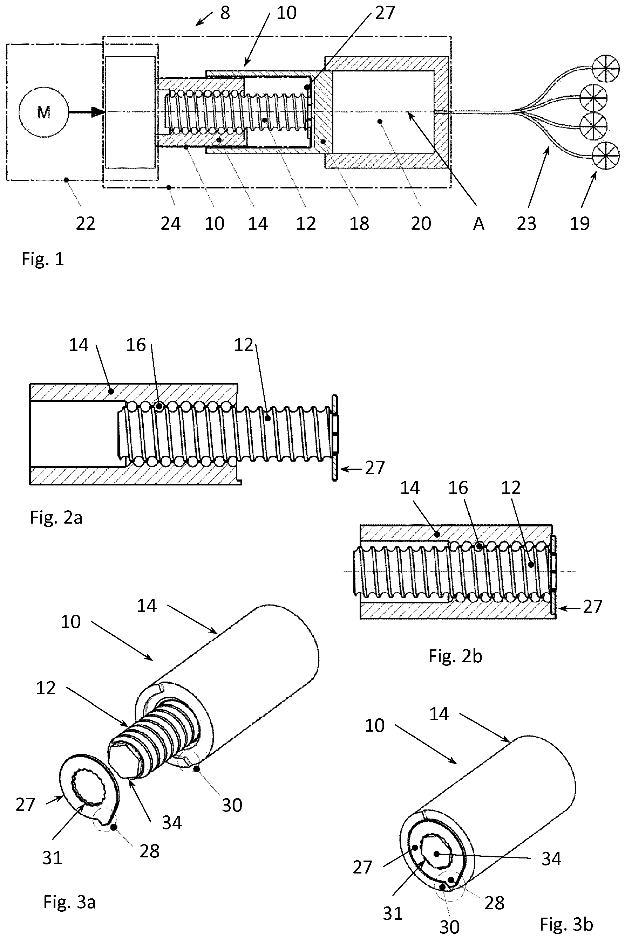

Fig. 1 zeigt eine Gesamtdarstellung einer elektromechanisch betätigbaren Fahrzeugbetriebsbremse, die insgesamt mit 8 bezeichnet ist. An einem Servobremsgehäuse 24, dessen Umriss strichpunktiert gezeigt ist, ist ein elektromechanischer Aktuator 22 angebracht, der einen Elektromotor M aufweist. Mit einem strichpunktiert angedeuteten Gehäuse des Aktuators 22 ist ein Wälzkörpergewindegetriebe 10 verbunden. Das Wälzkörpergewindegetriebe 10 setzt eine Rotationsbewegung des Aktuators 22 in eine Translationsbewegung um. Das Wälzkörpergewindegetriebe 10 wirkt über einen Druckkolben 18 auf ein nicht im einzelnen gezeigtes Betätigungsteil einer Radbremse ein. Es sind vier Räder 19 eines im Übrigen nicht gezeigten Fahrzeuges dargestellt, die über einen Hydraulikkreis 23 mit einem Betriebsdruckraum 20 verbunden sind. Das Betätigungsteil für die Radbremsen der vier Räder 19 ist der Druckkolben 18, der in einem Servobremsgehäuse 24 den Betriebsdruckraum 20 begrenzt. Zur Durchführung von verstärkten Betriebsbremsungen ist der Druckkolben 18 elektromechanisch über das Wälzkörpergewindegetriebe 10 betätigbar, um seinerseits hydraulisches Druckmittel in dem Betriebsdruckraum 20 mit Druck zu beaufschlagen, so dass der Druckkolben 18 zur Erzielung einer Bremswirkung an einem abzubremsenden Fahrzeugrad 19 für den Druckaufbau an dem nicht dargestellten Betätigungsteil einer nicht dargestellten Radbremse entlang einer Kolbenlängsachse A betätigbar ist. Für die Betätigung des Druckkolbens 18 ist die Gewindemutter 14 ortsfest angeordnet und an dem Aktuator 22 drehbar gelagert. Über Wälzkörper 16, bei denen es sich in dem gezeigten Ausführungsbeispiel um Kugeln handelt, ist die axial bewegliche Gewindespindel 12 mit dem Gewinde der Gewindemutter 14 in Eingriff. An ihrem in der Darstellung in Fig. 1 rechten Ende ist die Gewindespindel 12 mit dem Druckkolben 18 in Antriebsverbindung.

In Fig. 2a ist als eine Einzelheit des Wälzkörpergewindegetriebes 10 die Gewindemutter 14 mit ausgefahrener Gewindespindel 12 gezeigt. In Fig. 2b ist die Gewindemutter 14 mit zurückgestellter oder eingefahrener Gewindespindel 12 gezeigt. Bei dem Zurückstellen der Gewindespindel 12 in die Gewindemutter 14 schlägt die Gewindespindel mit einer ringförmigen Radialanschlagscheibe 27 an einer Stirnseite der Gewindemutter 14 an.

Die Figuren 3a und 3b zeigen das Wälzkörpergewindegetriebe 10 nach Fig. 2a beziehungsweise nach Fig. 2b jeweils in einer perspektivischen Darstellung. In den Fig. 3a und 3b ist zu erkennen, dass die Radialanschlagscheibe 27 einen radialen Vorsprung 28 aufweist, der bei dem Zurückstellen der Gewindespindel 12 von einer Freistellung 30 in einer Stirnseite der Gewindemutter 14 aufgenommen wird, um eine weitere Drehung der Gewindespindel 12 relativ zu der Gewindemutter 14 zu verhindern.

Der radiale Vorsprung 28 und die Freistellung 30 sind hier sogenannte mechanische Mittel, von denen der Vorsprung 28 mit der Gewindespindel 12 in kraftübertragender Verbindung steht und mit der Freistellung 30 in der Gewindemutter 14 derart zusammen wirkt, dass ein Anschlag in Umfangsrichtung gebildet wird, der ein Verklemmen der Gewindespindel 12 und der Gewindemutter 14 verhindert.

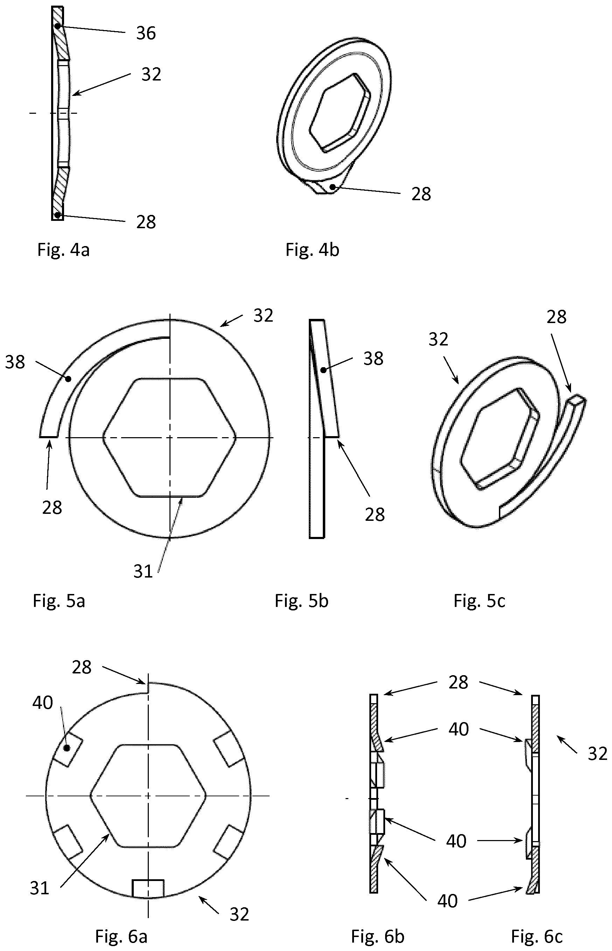

Die Radialanschlagscheibe 27 hat an ihrem inneren Umfang eine Mehrkantverzahnung, die es erlaubt, die Radialanschlagscheibe 27 in verschiedenen wählbaren Winkelstellungen auf einem als ein Sechskant 34 ausgebildeten Ende der Gewindespindel 12 anzubringen, wie es aus den Fig. 3a und 3b ersichtlich ist. Damit die Gewindespindel 12 beim Zurückstellen aus einer Stellung, wie sie zum Beispiel in Fig. 3a gezeigt ist, in eine Stellung, wie sie zum Beispiel in Fig. 3b gezeigt ist, in einer bestimmten Winkellage zum Stehen kommt, das heißt der Radialanschlag, den der Vorsprung 28 bildet, also in der Freistellung 30 zu liegen kommt, ist ein orientiertes Gewinde zwischen der Gewindespindel 12 und der Gewindemutter 14 nötig. Das bedeutet einen erheblichen Aufwand bei der Fertigung des Wälzkörpergewindegetriebes 10. Zur Einhaltung von engen Längentoleranzen beim Radialanschlag eines Wälzkörpergewindegetriebes ist dieses erfindungsgemäß nicht nur mit den mechanischen Mitteln 28, 30 versehen, sondern zusätzlich mit einem Kompensations- oder Ausgleichselement 32, für welches bevorzugte Ausführungsbeispiele in den Fig. 4a bis 8b dargestellt sind, auf welche weiter unten näher eingegangen wird. Mit dem Ausgleichselement 32 lassen sich enge Längentoleranzen beim Radialanschlag eines Wälzkörpergewindegetriebes einhalten, ohne dass ein orientiertes Gewinde zwischen der Gewindespindel 12 und der Gewindemutter 14 benötigt wird.

Durch das nicht orientierte Gewinde von Gewindespindel 12 und Gewindemutter 14 kann die Überlappung der Radialanschlagscheibe 27 bei der Gewindemutter 14 je nach Zähnezahl der Verzahnung massiv in der Gesamtlänge des Gesamtsystems schwanken. Um dies zu verhindern und um die Längentoleranzen eines orientierten Gewindes zu erreichen, wird das Ausgleichselement 32 benötigt,.

Bei dem in den Fig. 3a und 3b dargestellten Wälzkörpergewindegetriebe ist die Freistellung 30 eine Nut.

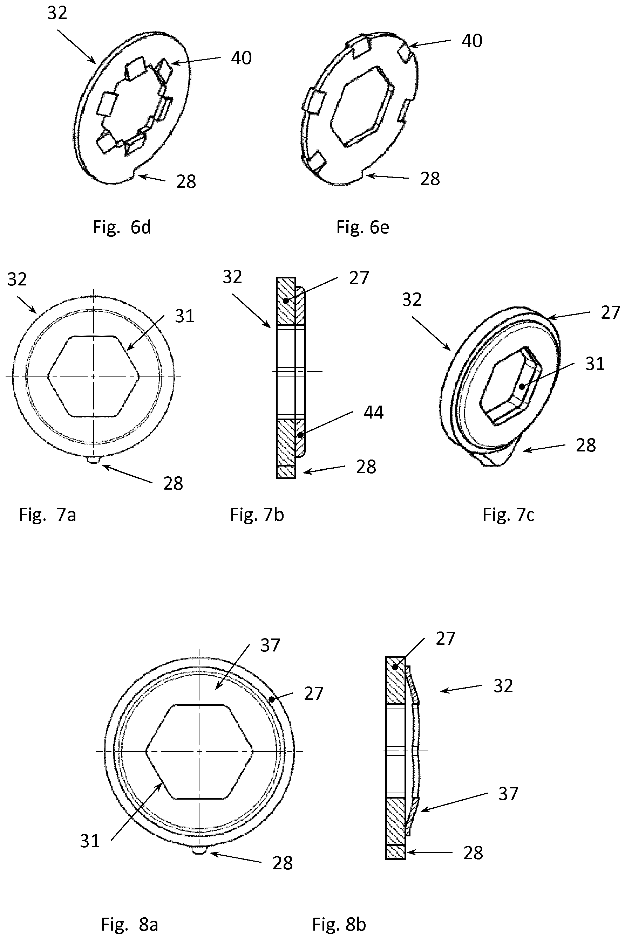

Verschiedene Ausführungsformen eines Ausgleichselementes 32 sind in den Fig. 4a bis 8b dargestellt. In allen Ausführungsformen sind der Vorsprung 28 und das Ausgleichselement 32 an einer ringförmigen Radialanschlagscheibe 27 ausgebildet. Die Ausbildung kann einteilig sein wie in den Fig. 4a bis 6e oder zweiteilig wie in den Fig. 7a bis 8b. Weiter ist bei allen Ausbildungen die Radialanschlagscheibe 27 an ihrem inneren Umfang mit der Mehrkantverzahnung 31 versehen, die mit dem Sechskant 34 der Gewindespindel 12 zusammenpasst, der in den Fig. 3a und 3b gezeigt ist. Bei sämtlichen hier gezeigten und beschriebenen Ausführungsformen ist die Radialanschlagscheibe 27 getrennt von der Gewindespindel 12 ausgebildet und mittels ihrer Mehrkantverzahnung 31 auf dem Sechskant 34 der Gewindespindel 12 fest oder lose montiert.

In der 1-teiligen Ausbildung der Radialanschlagscheibe 27 und des Ausgleichselements 32 können beide gemeinsam durch eine Tellerfeder 36 gebildet sein, wie sie in den Fig. 4a und 4b gezeigt ist.

In der Ausführungsform nach den Fig. 5a bis 5c ist die Radialanschlagscheibe 27 mit einem am äußeren Umfang integrierten Federelement 38 ausgebildet. Das Federelement 38 bildet den Vorsprung 28 als radialen Anschlag und ist zugleich axial federnd ausgebildet, so dass das Ausgleichselement 32 den Radialanschlag aufweist und in axialer Richtung die gewünschte Dämpfung bewirkt.

Gemäß der Darstellung in den Fig. 6a bis 6e ist die Radialanschlagscheibe 27 am inneren und/oder äußeren Umfang mit inneren und/oder äußeren axial federnden Laschen 40 als Vorsprung versehen und bildet mit diesen gemeinsam das Ausgleichselement 32.

In den Ausführungsformen, die in den Fig. 7a bis 8b gezeigt sind, sind die Radialanschlagscheibe 27 und das Ausgleichselement 32 2-teilig ausgebildet. Bei der Ausführungsform des Ausgleichselements 32 nach den Fig. 7a bis 7c ist auf die Radialanschlagscheibe 27 axial auf einer Seite das Ausgleichselement 32 aufgebracht. Das Ausgleichselement 32 ist dabei als eine elastische Beschichtung ausgebildet, vorzugsweise aus Gummi.

Bei der Ausführungsform nach den Fig. 8a und 8b ist das Ausgleichselement 32 als eine separate Tellerfeder 37 ausgebildet, die axial auf einer Seite der Radialanschlagscheibe 27 angebracht ist.

### Bezugszeichenliste

- 8: elektromechanisch betätigbare Fahrzeugbetriebsbremse
- 10: Getriebe (Wälzkörpergewindegetriebe)
- 12: Gewindespindel
- 14: Gewindemutter
- 16: Wälzkörper
- 18: Druckkolben
- 19: Rad
- 20: Betriebsdruckraum
- 22: Aktuator
- 23: Hydraulikkreis
- 24: Servobremsgehäuse
- 27: Radialanschlagscheibe
- 28: Vorsprung
- 30: Freistellung
- 28, 30: mechanische Mittel
- 31: Mehrkantverzahnung
- 32: Ausgleichselement
- 34: Sechskant
- 36: Tellerfeder (mit Radialanschlag)
- 37: Tellerfeder (ohne Radialanschlag)
- 38: integriertes Federelement
- 40: Laschen
- 44: elastische Beschichtung

## Patentansprüche

1. Elektromechanisch betätigbare Fahrzeugbetriebsbremse (8) mit einem Linearantrieb, bei dem von einem elektromechanischen Aktuator (22) aus über ein Getriebe (10), das eine Rotationsbewegung des elektromechanischen Aktuators (22) in eine Translationsbewegung umsetzt, auf ein Betätigungsteil für Radbremsen eingewirkt wird, wobei das Betätigungsteil für Radbremsen ein Druckkolben (18) ist,
wobei das Getriebe (10) ein Wälzkörpergewindegetriebe ist, das eine Gewindespindel (12) und eine Gewindemutter (14) aufweist, die über mehrere Wälzkörper (16) in Kontakt stehen, und
dass in einem Servobremsgehäuse (24) ein hydraulischer Betriebsdruckraum (20) von dem Druckkolben (18) begrenzt ist, der zur Durchführung von verstärkten Betriebsbremsungen elektromechanisch über das Getriebe (10) betätigbar ist, um seinerseits hydraulisches Druckmittel in dem Betriebsdruckraum (20) mit Druck zu beaufschlagen, so dass der Druckkolben (18) zur Erzielung einer Bremswirkung an einem abzubremsenden Fahrzeugrad (19) für den Druckaufbau an dem Betätigungsteil einer Radbremse entlang einer Kolbenlängsachse (A) betätigbar ist,
**dadurch gekennzeichnet, dass**
wobei dem Linearantrieb mechanische Mittel (28, 30) zugeordnet sind, die ein Verklemmen der Gewindespindel (12) und der Gewindemutter (14) verhindern,
wobei die mechanischen Mittel (28, 30) einen Vorsprung (28) umfassen, der mit der Gewindespindel (12) in kraftübertragender Verbindung steht und der mit einer Freistellung (30) in der Gewindemutter (14) derart zusammenwirkt, dass ein Anschlag in Umfangsrichtung gebildet wird, der das Verklemmen verhindert,
und dass die mechanischen Mittel (28, 30) zusätzlich ein Ausgleichselement (32) umfassen, das dem Vorsprung (28) zugeordnet und axial federnd ausgebildet ist.

2. Fahrzeugbetriebsbremse nach Anspruch 1, **dadurch gekennzeichnet, dass** bei dem Linearantrieb die Gewindemutter (14) des Wälzkörpergewindegetriebes ortsfest ausgebildet und durch den Aktuator (22) in Drehung versetzbar ist und dass die Gewindespindel (12) axial beweglich ausgebildet und mit dem Druckkolben (18) in Antriebsverbindung ist.

3. Fahrzeugbetriebsbremse nach Anspruch 1 oder 2, **dadurch gekennzeichnet, dass** die Freistellung (30) eine Nut ist.

4. Fahrzeugbetriebsbremse nach einem der vorhergehenden Ansprüche, **dadurch gekennzeichnet, dass** der Vorsprung (28) und das Ausgleichselement (32) an einer ringförmigen Radialanschlagscheibe (27) ausgebildet sind.

5. Fahrzeugbetriebsbremse nach Anspruch 4, **dadurch gekennzeichnet, dass** die Radialanschlagscheibe (27) an einem inneren Umfang mit einer Mehrkantverzahnung (31) versehen ist.

6. Fahrzeugbetriebsbremse nach Anspruch 4 oder 5, **dadurch gekennzeichnet, dass** die Radialanschlagscheibe (27) getrennt von der Gewindespindel (12) ausgebildet und mittels ihrer Mehrkantverzahnung (31) auf einem Sechs- oder anderen Mehrkant (34) der Gewindespindel (12) fest oder lose montiert ist.

7. Fahrzeugbetriebsbremse nach einem der Ansprüche 4 bis 6, **dadurch gekennzeichnet, dass** die Radialanschlagscheibe (27) und das Ausgleichselement (32) 1-teilig ausgebildet sind.

8. Fahrzeugbetriebsbremse nach Anspruch 7, **dadurch gekennzeichnet, dass** die Radialanschlagscheibe (27) und das Ausgleichselement (32) durch eine Tellerfeder (36) gebildet sind.

9. Fahrzeugbetriebsbremse nach Anspruch 7, **dadurch gekennzeichnet, dass** die Radialanschlagscheibe (27) mit einem am äußeren Umfang integrierten Federelement (38) ausgebildet ist.

10. Fahrzeugbetriebsbremse nach Anspruch 7, **dadurch gekennzeichnet, dass** die Radialanschlagscheibe (27) am inneren und/oder äußeren Umfang mit inneren und/oder äußeren axial federnden Laschen (40) als Vorsprüngen versehen ist und mit diesen gemeinsam das Ausgleichselement (32) bildet.

11. Fahrzeugbetriebsbremse nach einem der Ansprüche 4 bis 6, **dadurch gekennzeichnet, dass** die Radialanschlagscheibe (27) und das Ausgleichselement (32) 2-teilig ausgebildet sind.

12. Fahrzeugbetriebsbremse nach Anspruch 11, **dadurch gekennzeichnet, dass** auf die Radialanschlagscheibe (27) axial auf einer Seite das Ausgleichselement (32) aufgebracht ist.

13. Fahrzeugbetriebsbremse nach Anspruch 11 oder 12, **dadurch gekennzeichnet, dass** das Ausgleichselement (32) als eine elastische Beschichtung ausgebildet ist.

14. Fahrzeugbetriebsbremse nach Anspruch 11, **dadurch gekennzeichnet, dass** das Ausgleichselement (32) als eine Tellerfeder (37) ausgebildet ist.

15. Linearantrieb, insbesondere für eine Fahrzeugbetriebsbremse mit elektromechanisch-hydraulischer Bremskraftverstärkung, **gekennzeichnet durch** die Merkmale des Linearantriebs nach einem der vorhergehenden Ansprüche.

16. Mechanische Mittel zum Verhindern eines Verklemmens einer Gewindespindel (12) und einer Gewindemutter (14) eines Wälzkörpergewindegetriebes (10), insbesondere bei einer Fahrzeugbetriebsbremse mit elektromechanisch-hydraulischer Bremskraftverstärkung, **gekennzeichnet durch** die Merkmale der mechanischen Mittel (28, 30, 32 - 44) nach einem der Ansprüche 1 bis 14.

## Claims

1. An electromechanically actuatable vehicle service brake (8) having a linear drive, in which an actuating part for wheel brakes is acted upon from an electromechanical actuator (22) via a transmission (10) which converts a rotational movement of the electromechanical actuator (22) into a translational movement, wherein the actuating part for wheel brakes is a pressure piston (18),
wherein the drive (10) is a rolling body threaded drive having a threaded spindle (12) and a threaded nut (14) which are in contact via a plurality of rolling bodies (16), and
wherein, in a servo brake housing (24), a hydraulic working pressure chamber (20) is defined by the pressure piston (18) which can be actuated electromechanically via the transmission (10) in order to carry out increased service braking, so as to, for its part, pressurize an hydraulic pressure medium in the working pressure chamber (20), so that the pressure piston (18) can be actuated along a piston longitudinal axis (A) for pressure build-up on the actuating part of a wheel brake for achieving a braking effect on a vehicle wheel (19) to be braked, **characterized in that**
mechanical means (28, 30) are associated with the linear drive which prevent the threaded spindle (12) and the threaded nut (14) from jamming,
wherein the mechanical means (28, 30) comprise a projection (28) in force-transmitting communication with the threaded spindle (12) and interacting with a clearance (30) in the threaded nut (14) in such a manner that a stop is formed in the circumferential direction, which stop prevents jamming,
and **in that** the mechanical means (28, 30) additionally comprise a compensating element (32) associated with the projection (28) and formed to be axially resilient.

2. The vehicle service brake according to claim 1, **characterized in that** in the linear drive, the threaded nut (14) of the rolling body threaded drive is of stationary design and can be set in rotation by the actuator (22), and **in that** the threaded spindle (12) is of axially movable design and is in drive connection with the pressure piston (18).

3. The vehicle service brake according to claim 1 or 2, **characterized in that** the clearance (30) is a groove.

4. The vehicle service brake according to any one of the preceding claims, **characterized in that** the projection (28) and the compensating element (32) are formed on an annular radial stop disc (27).

5. The vehicle service brake according to claim 4, **characterized in that** on an inner circumference, the radial stop disc (27) is provided with a polygonal toothing (31).

6. The vehicle service brake according to claim 4 or 5, **characterized in that** the radial stop disc (27) is formed separately from the threaded spindle (12) and is fixedly or loosely mounted on a hexagon or other polygon (34) of the threaded spindle (12) by means of its polygon toothing (31).

7. The vehicle service brake according to any one of claims 4 to 6, **characterized in that** the radial stop disc (27) and the compensating element (32) are formed in one piece.

8. The vehicle service brake according to claim 7, **characterized in that** the radial stop disc (27) and the compensating element (32) are formed by a disc spring (36).

9. The vehicle service brake according to claim 7, **characterized in that** the radial stop disc (27) is formed with a spring element (38) integrated on the outer circumference.

10. The vehicle service brake according to claim 7, **characterized in that** the radial stop disc (27) is provided on the inner and/or outer circumference with inner and/or outer axially resilient lugs (40) as projections and together with them forms the compensating element (32).

11. The vehicle service brake according to any one of claims 4 to 6, **characterized in that** the radial stop disc (27) and the compensating element (32) are formed in two parts.

12. The vehicle service brake according to claim 11, **characterized in that** the compensating element (32) is attached axially on one side of the radial stop disc (27) .

13. The vehicle service brake according to claim 11 or 12, **characterized in that** the compensating element (32) is formed as an elastic coating.

14. The vehicle service brake according to claim 11, **characterized in that** the compensating element (32) is formed as a disc spring (37).

15. A linear drive, in particular for a vehicle service brake with electromechanical-hydraulic power brake, **characterized by** the features of the linear drive according to any one of the preceding claims.

16. Mechanical means for preventing jamming of a threaded spindle (12) and a threaded nut (14) of a rolling body threaded drive (10), in particular for a vehicle service brake with electromechanical-hydraulic power brake, **characterized by** the features of the mechanical means (28, 30, 32 - 44) according to any one of claims 1 to 14.

## Revendications

1. Frein de service de véhicule pouvant être actionné de manière électromécanique (8) avec un entraînement linéaire, pour lequel on agit sur une partie d'actionnement pour des freins de roues depuis un actionneur électromécanique (22) par le biais d'une transmission (10), qui convertit un mouvement de rotation de l'actionneur électromécanique (22) en un mouvement de translation, sachant que la partie d'actionnement pour les freins de roues est un piston de compression (18),
sachant que la transmission (10) est une transmission filetée à éléments de roulement, qui comporte une tige filetée (12) et un écrou fileté (14), qui sont en contact par le biais de plusieurs éléments de roulement (16), et
que dans un carter de servofrein (24) un espace de pression de service (20) est délimité par le piston de compression (18), qui peut être actionné de manière électromécanique par la transmission (10) pour exécuter des freinages de service amplifiés pour solliciter en pression de son côté des moyens de pression hydrauliques dans l'espace de pression de service (20) hydraulique de telle manière que le piston de compression (18) peut être actionné pour atteindre un effet de freinage sur une roue de véhicule (19) à freiner pour la montée en pression sur la partie d'actionnement d'un frein de roue le long d'un axe longitudinal de piston (A),
**caractérisé en ce que**
sachant que des moyens mécaniques (28, 30) sont attribués à l'entraînement linéaire, qui évitent un blocage de la tige filetée (12) et du boulon fileté (14),
sachant que les moyens mécaniques (28, 30) comprennent une saillie (28) qui est en liaison de transmission de force avec la tige filetée (12) et qui coopère avec une position libre (30) dans l'écrou fileté (14) de telle manière qu'une butée est formée dans la direction périphérique, qui évite le blocage et **en ce que** les moyens mécaniques (28, 30) comprennent en plus un élément de compensation (32), qui est attribué à la saillie (28) et est constitué faisant axialement ressort.

2. Frein de service de véhicule selon la revendication 1, **caractérisé en ce que** concernant l'entraînement linéaire, l'écrou fileté (14) de la transmission filetée à éléments de roulement est constitué fixe et peut être déplacé en rotation par l'actionneur (22) et **en ce que** la tige filetée (12) est constituée axialement mobile et est en liaison d'entraînement avec le piston de compression (18).

3. Frein de service de véhicule selon la revendication 1 ou 2, **caractérisé en ce que** la position libre (30) est une rainure.

4. Frein de service de véhicule selon l'une quelconque des revendications précédentes, **caractérisé en ce que** la saillie (28) et l'élément de compensation (32) sont constitués sur un disque de butée radial (27) de forme annulaire.

5. Frein de service de véhicule selon la revendication 4, **caractérisé en ce que** le disque de butée radial (27) est doté sur sa périphérie intérieure d'une denture polygonale (31).

6. Frein de service de véhicule selon la revendication 4 ou 5, **caractérisé en ce que** le disque de butée radial (27) est constitué séparément de la tige filetée (12) et est monté fixement ou de façon amovible sur un hexagone ou polygone (34) de la tige filetée (12) au moyen de sa denture polygonale (31).

7. Frein de service de véhicule selon l'une quelconque des revendications 4 à 6, **caractérisé en ce que** le disque de butée radial (27) et l'élément de compensation (32) sont constitués en une pièce.

8. Frein de service de véhicule selon la revendication 7, **caractérisé en ce que** le disque de butée radial (27) et l'élément de compensation (32) sont formés par un ressort Belleville (36).

9. Frein de service de véhicule selon la revendication 7, **caractérisé en ce que** le disque de butée radial (27) est constitué d'un élément de ressort (38) intégré sur la périphérie extérieure.

10. Frein de service de véhicule selon la revendication 7, **caractérisé en ce que** le disque de butée radial (27) est doté à la périphérie intérieure et/ou extérieure d'attaches (40) intérieures et/ou extérieures faisant axialement ressort sous la forme de saillies et forme en commun avec celles-ci l'élément de compensation (32) .

11. Frein de service de véhicule selon l'une quelconque des revendications 4 à 6, **caractérisé en ce que** le disque de butée radial (27) et l'élément de compensation (32) sont constitués en deux parties.

12. Frein de service de véhicule selon la revendication 11, **caractérisé en ce que** l'élément de compensation (32) est monté axialement sur un côté sur le disque de butée radial (27).

13. Frein de service de véhicule selon la revendication 11 ou 12, **caractérisé en ce que** l'élément de compensation (32) est constitué comme un revêtement élastique.

14. Frein de service de véhicule selon la revendication 11, **caractérisé en ce que** l'élément de compensation (32) est constitué comme un ressort Belleville (37).

15. Entraînement linéaire, en particulier pour un frein de service de véhicule avec une assistance de freinage électromécanique-hydraulique, **caractérisé par** les caractéristiques de l'entraînement linéaire selon l'une des revendications précédentes.

16. Moyens mécaniques pour éviter un blocage d'une tige filetée (12) et d'un écrou fileté (14) d'une transmission filetée à éléments de roulement (10), en particulier pour un frein de service de véhicule avec une assistance de freinage électromécanique-hydraulique, **caractérisés par** les caractéristiques des moyens mécaniques (28, 30 32-44) selon l'une quelconque des revendications 1 à 14.
